# FASCICULE DE BREVET EUROPEEN

(11) **EP 2 143 314 B1**
(45) Date de publication et mention de la délivrance du brevet: **15.02.2012**
(21) Numéro de dépôt: 09164771.9
(22) Date de dépôt: 07.07.2009
(51) Int. Cl.: A01B 59/06

(54) **Bielle supérieure perfectionnée**
Verbesserter oberer Lenker
Improved upper link

(30) Priorité: 08.07.2008 FR 0854639
(43) Date de publication de la demande: 13.01.2010
(73) Titulaire: Kuhn-Huard S.A., 44142 Chateaubriant Cedex (FR)
(72) Inventeur: Dersoir, Frédéric, 44520, Moisdon Riviere (FR); Herault, Vincent, 44470, Mauves sur Loire (FR); Cueille, Laurent, 44110, Erbray (FR)
(74) Mandataire: Andres, Jean-Claude

(56) Documents cités:
- EP-A- 1 982 570
- US-A- 3 791 454
- US-A- 3 905 425
- US-A1- 2001 007 399
- US-A1- 2007 000 673

## Description

La présente invention se rapporte au domaine technique général du machinisme agricole et plus spécialement les dispositifs pour la solidarisation d'une machine au système d'attelage trois points d'un tracteur. L'invention concerne une bielle supérieure pour accrocher une machine agricole munie d'un dispositif d'accouplement en trois points à un tracteur présentant un attelage trois points, le point supérieur d'attelage du dispositif d'accouplement est relié au point d'appui supérieur du tracteur au moyen de ladite bielle supérieure, ladite machine agricole est portée via l'attelage trois points durant le travail et est semi-portée lors du transport.

Les machines agricoles en particulier des machines de travail ou de préparation du sol, telles que des charrues, sont reliées au véhicule tracteur par un attelage trois points normalisé. Un tel attelage présente deux barres inférieures droite et gauche et une bielle supérieure centrale. Une telle machine est portée lors du travail et au cours des déplacements dans les champs c'est-à-dire que l'attelage du tracteur supporte la totalité du poids. Par contre à cause de son poids, elle est semi-portée lors des déplacements sur les routes. La machine prend alors partiellement appui sur le sol par l'intermédiaire d'une roue. L'attelage du tracteur ne supporte alors qu'une partie du poids de la machine. Pour que cette machine puisse suivre les dénivellations de la route lors du transport, il faut par exemple autoriser la rotation autour des points d'attelage inférieurs. Il est ainsi notamment connu de décrocher la bielle supérieure. Le décrochage est alors réalisé manuellement. Pour revenir à la position de travail, il faut donc à nouveau solidariser la bielle supérieure au dispositif d'accouplement de la machine. Cette opération n'est pas facile à réaliser, car elle nécessite l'utilisation du relevage hydraulique du tracteur pour que la bielle supérieure puisse être reliée au point supérieur d'attelage du dispositif d'accouplement.

Le document FR 2 666 485 décrit un dispositif d'accouplement d'une charrue au système d'attelage trois points d'un tracteur. Cette charrue est portée lors du travail et s'appuie sur une roue et sur les deux barres inférieures lors du transport. La charrue présente une potence en deux parties, une partie avant portant le point supérieur d'attelage et une partie arrière portant les points inférieurs d'attelage. La partie arrière est solidaire de l'avant-train de la charrue. Les parties sont mobiles l'une par rapport à l'autre en translation dans le sens vertical et en rotation autour d'un axe sensiblement horizontal et perpendiculaire à la direction d'avance. Les deux parties sont réunies au moyen d'un galet supérieur lors du travail. Pour le transport, le galet supérieur est déverrouillé par coulissement vers le haut et la partie avant de la potence est libre de pivoter autour de l'axe sensiblement horizontal. Grâce à la rotation autour de l'axe sensiblement horizontal, la charrue peut suivre les dénivellations de la route lors du transport. La bielle supérieure reste donc toujours liée au point d'appui supérieur du tracteur et au point supérieur d'attelage de la charrue. Pour revenir à la configuration de travail, il suffit d'actionner le relevage hydraulique du tracteur vers le bas jusqu'à ce que le galet supérieur solidarise la partie avant avec la partie arrière de la potence.

Cette charrue est donc équipée d'un dispositif d'accouplement spécifique permettant le passage de la position de travail à la position de transport, et inversement, relativement rapide. Par contre avec cet équipement spécifique composé de la potence en deux parties, la charrue présente des inconvénients notamment un accroissement du poids ainsi qu'une augmentation notable de son coût d'achat.

Le document EP 1 982 570 présente une bielle supérieure d'un attelage à trois points. Cette bielle supérieure est un vérin hydraulique ayant deux positions de travail. Dans l'une des positions, la bielle supérieure est rigide et dans l'autre la bielle supérieure est flottante. Le passage d'une position rigide à une position flottante étant réalisé sous charge sans démontage de la bielle supérieure. La position flottante de la bielle supérieure permet une liberté de mouvement par rapport au tracteur pour que la machine agricole puisse mieux suivre le sol lors du travail. Cette machine agricole étant liée à l'attelage trois points d'un tracteur, elle est portée lors du transport.

La présente invention a pour but de remédier aux inconvénients précités en proposant une solution permettant de passer rapidement de la position de travail à la position de transport, et inversement, de manière simple, à moindre coût et dont l'impact sur le poids total de la machine est limité.

A cet effet, une importante caractéristique de l'invention consiste en ce que la bielle supérieure comporte un cylindre, une tige, un dispositif élastique et un sélecteur permettant le passage de la position de travail à la position de transport, et inversement. Grâce au sélecteur, la bielle supérieure peut être positionnée dans au moins deux positions. Cette bielle supérieure permet alors un accouplement rigide d'une machine à l'attelage trois points d'un tracteur et autorise un degré de liberté à la machine semi-portée durant le transport pour suivre les dénivellations du sol. Le sélecteur permet à la bielle supérieure de passer rapidement et facilement d'une configuration à l'autre pour un coût raisonnable et sans augmentation notable de poids.

D'autres caractéristiques et avantages de l'invention se dégageront des revendications et de la description qui vont suivre des exemples de réalisation non limitatifs de l'invention avec référence aux dessins annexés dans lesquels :
- la **figure 1** montre une machine agricole portée dans une position relevée en fin de champ,
- la **figure 2** représente la machine agricole semi-portée lors du transport,
- la **figure 3** représente, à plus grande échelle, la bielle supérieure selon l'invention configurée pour la position de travail,
- la **figure 4** représente la bielle supérieure de la figure 3 configurée pour la position de transport,
- la **figure 5** représente un deuxième exemple de réalisation d'une bielle supérieure configurée pour la position de travail,
- la **figure 6** représente la bielle supérieure de la figure 5 configurée pour la position de transport.

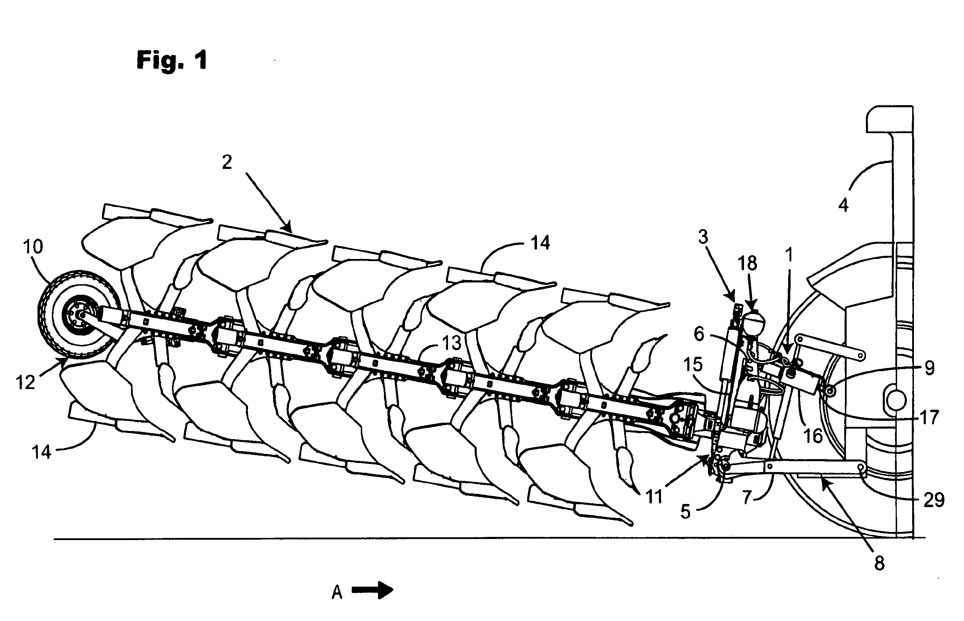

La figure 1 représente une machine agricole (2) avec un dispositif d'accouplement (3) en trois points qui est reliée à un tracteur (4). Le dispositif d'accouplement (3) présente notamment deux points inférieurs (5) d'attelage et un point supérieur (6) d'attelage. Les deux points inférieurs (5) sont destinés à l'accouplement à deux barres d'attelage (7) du système d'attelage trois points (8) du tracteur (4). Ces deux barres (7) sont disposées au même niveau par rapport au sol et sont écartées l'une par rapport à l'autre. Le point supérieur (6) est situé à un niveau supérieur, sensiblement au milieu des deux points inférieurs (5). Le point supérieur (6) est destiné à être relié au point d'appui supérieur (9) du tracteur par l'intermédiaire d'une bielle supérieure (1). Un tel attelage trois points (8) est classique. Les barres (7) peuvent être déplacées autour de leurs points d'appui inférieurs (29) situés sur le tracteur (4), afin de déplacer la machine (2) en hauteur. La machine (2), ainsi reliée, est portée et l'attelage trois points (8) du tracteur (4) supporte la totalité du poids. Par contre lors du transport, la machine (2) est semi-portée à cause de son poids. Elle repose au sol au moyen d'une roue (10), ainsi l'attelage (8) du tracteur ne supporte qu'une partie du poids.

A titre d'illustration, la présente invention est décrite en référence à une machine agricole du type charrue. Toutefois, la présente invention ne se limite pas à ce genre d'outils, elle s'applique aussi bien à des machines de travail du sol, comme à des machines de récolte de fourrage, etc ...

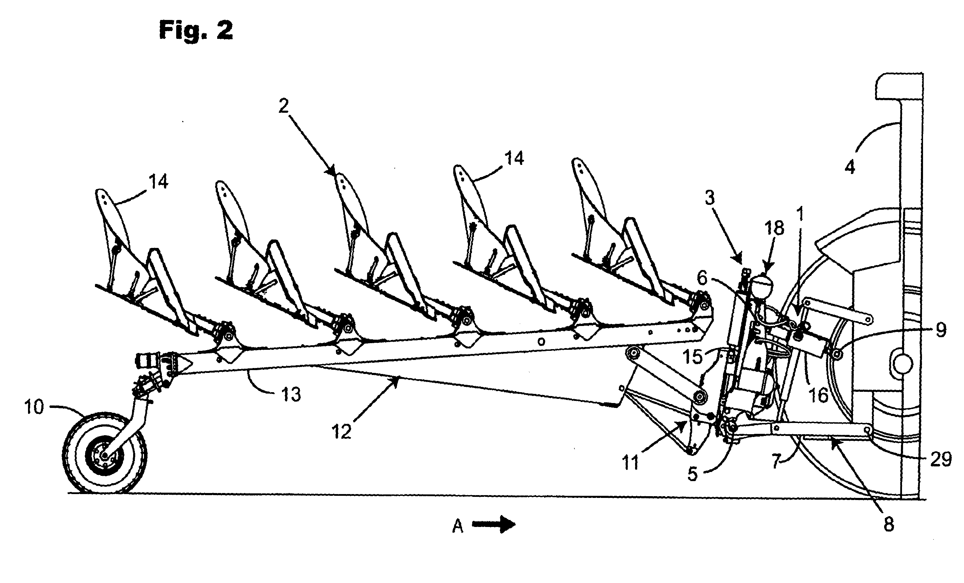

La charrue, représentée sur les figures 1 et 2, comporte un avant-train (11) et un arrière-train (12). L'avant-train (11) est la partie avant de la charrue reliée à l'attelage trois points (8) du tracteur par l'intermédiaire du dispositif d'accouplement (3). L'avant-train (11) porte l'arrière-train (12) qui est globalement composé d'un bâti (13), d'ages et de corps de labour (14). L'accrochage des deux points inférieurs (5) de la charrue sur l'attelage trois points (8) est, le plus souvent, assuré par une traverse amovible qui est fixée sur les barres (7) du tracteur. Le point supérieur (6) est relié au tracteur (4) par l'intermédiaire de la bielle supérieure (1). L'avant-train (11) comporte à cet effet une potence ( 15). La potence (15) présente plusieurs positions d'attelage pour la bielle supérieure (1) pour pouvoir s'ajuster au mieux à la hauteur des points de traction du tracteur (4). Ainsi accouplée, la charrue est déplacée dans une direction d'avance indiquée par la flèche (A) au travail comme au transport par l'intermédiaire du tracteur. Dans la suite de la description, les notions "avant" et "arrière", "devant" et "derrière" sont définies par rapport au sens d'avance (A) et les notions "droite" et "gauche" sont définies en regardant la charrue de l'arrière dans ledit sens d'avance (A).

Le bâti (13) est l'ensemble relié à l'avant-train (11). Il supporte les ages et les corps de labour (14). Il est constitué d'une poutre de section carrée ou rectangulaire, qui est renforcée localement pour résister aux efforts de torsion lors du travail et aux efforts de flexion durant le transport. Dans l'exemple de réalisation des figures, il s'agit d'une charrue réversible avec cinq corps de labour ( 14). Cette charrue est portée lors du travail et au cours des déplacements dans les champs alors qu'elle est semi-portée lors des déplacements sur les routes à cause de son poids. Le bâti (13) porte donc également une roue (10). Cette roue (10) est montée à l'arrière du dernier corps pour diminuer les efforts sur l'attelage trois points (8). La charrue repose sur cette roue (10) lors des déplacements sur les routes et les chemins. Il s'agit d'une roue de transport. Parfois, cette roue est aussi utilisée comme roue de régulation pour le contrôle de la profondeur de travail des corps de labour (14).

Selon une caractéristique importante de l'invention, la bielle supérieure (1) comporte un cylindre (16), une tige ( 17), un dispositif élastique (18) et un sélecteur (19). Grâce au sélecteur (19), la bielle supérieure (1) peut être configurée pour au moins deux positions. Elle est configurée soit pour la position de travail permettant un accouplement du type porté ou soit pour la position de transport permettant un accouplement du type semi-porté. La bielle supérieure permet d'une part un accouplement rigide d'une machine à l'attelage trois points d'un tracteur et autorise un degré de liberté à la machine semi-portée durant le transport pour suivre les dénivellations du sol.

La bielle supérieure (1) selon l'invention permet le passage de la configuration portée à la configuration semi-portée pour la machine agricole (2). Le passage se fait par sélection d'une longueur fixe ou d'une longueur libre de la bielle supérieure (1) grâce au sélecteur (19). La bielle supérieure (1) relie le point supérieur (6) d'attelage au point d'appui supérieur (9). La bielle supérieure (1) est réalisée en deux parties télescopiques. L'une des parties forme pratiquement un cylindre (16) dans lequel peut coulisser l'autre partie. L'autre partie est réalisée en forme de tige (17). Le sélecteur (19) permet donc une liaison qui d'une part limite et d'autre part autorise un mouvement de translation entre la tige ( 17) et le cylindre (16). A la lumière des figures 1 et 2, le cylindre (16) est destiné à être relié au point supérieur d'attelage (6) du dispositif d'accouplement (3). La tige (17) est reliée au point d'appui supérieur (9) du tracteur (4). Pour la liaison avec le tracteur (4) ou avec la machine agricole (2), le cylindre (16) comme la tige (17) sont munis d'une liaison rotule destinée à recevoir une broche permettant l'accouplement.

La figure 1 montre que les trois points d'attelage (5, 6) de la machine (2) sont reliés au système d'attelage trois points (8) du tracteur (4). La machine (2) est portée puisque le tracteur (4) supporte la totalité du poids. La bielle supérieure (1) est configurée pour avoir une longueur fixe. Le déplacement de la tige (17) dans le cylindre (16) est limité par le sélecteur (19). La figure 1 représente la charrue relevée en fin de champ lorsque les corps de labour ( 14) sont sortis de terre. Dans le cas représenté, il s'agit d'une charrue réversible avec des corps de labour (14) symétriques. Lors du soulèvement de la charrue hors du sol, la bielle supérieure (1) est soumise à des efforts qui ont tendance à faire allonger sa longueur. Lors du retournement pour faire travailler l'autre groupe de corps de labour, la bielle supérieure (1) est également sollicitée. En effet, le retournement crée un balourd, c'est-à-dire un déséquilibre du fait que le centre de gravité de la charrue ne se trouve pas sur l'axe de rotation. Le mouvement de balourd est essentiellement lié à l'inertie que prennent le bâti (13) et les corps de labour (14) lors du retournement. Le dispositif élastique (18) équipant la bielle supérieure (1) permet avantageusement de prévenir les détériorations dues aux contraintes élevées dans la charrue, lors du soulèvement et lors du retournement. Ainsi le dispositif élastique (18) absorbe l'augmentation de longueur de la bielle supérieure (1), il agit dans la direction de la bielle supérieure (1), et amorti le balourd. Le dispositif élastique (18) permet une diminution des contraintes. En général le retournement de la charrue est réalisé pendant que le tracteur (4) se déplace sur le champ. Durant les manoeuvres de demi-tour, la charrue est soulevée et est soumise également à des balancements qui se produisent lors du freinage et de l'accélération du tracteur (4).

Dans le cas du labour, les corps de labour ( 14) sont en terre et la profondeur est maintenue par l'intermédiaire du système d'attelage trois points (8). La bielle supérieure (1) permet le réglage de l'aplomb pour que la charrue travaille perpendiculairement au sol. Ainsi la longueur de la bielle supérieure (1) peut être adaptée par l'utilisateur. Ce réglage se fait mécaniquement sur la bielle supérieure (1) représentée sur les figures. Il est situé à l'arrière du cylindre (16) à l'extrémité opposée de la tige (17). Il s'agit d'une tige filetée munie d'une rotule permettant la liaison au point supérieur (6). Cette tige filetée est liée au cylindre (16) au moyen d'un tube intermédiaire. Ce tube intermédiaire présente un taraudage intérieur et un filetage extérieur. Le taraudage intérieur du tube intermédiaire est destiné à recevoir la tige filetée. Le filetage du tube intermédiaire correspond au taraudage du cylindre (16). Grâce à ce réglage mécanique, la longueur de la bielle supérieure (1) peut être modifiée pour s'adapter en fonction des réglages souhaités pour obtenir une bonne qualité de travail de la charrue.

La figure 2 représente la machine (2) dans sa position de transport, elle s'appuie au sol sur sa roue (10). Elle est semi-portée, seule une partie du poids est reporté sur le tracteur (4). La bielle supérieure (1) est configurée pour être flottante c'est-à-dire que sa longueur s'adapte pour suivre la route. Dans ce cas, le sélecteur ( 19) autorise un déplacement de la tige (17) dans le cylindre (16). Cette longueur libre de la bielle supérieure (1) permet à la charrue notamment à la roue (10) de suivre les différences de niveau de la route lors du transport lorsque la roue (10) passe sur les bosses et dans les creux. Ainsi, la distance entre le point supérieur (6) et le point d'appui supérieur (9) varie et la charrue peut pivoter autour des points inférieurs (5).

D'une manière particulièrement avantageuse, la bielle supérieure (1) est pourvue d'un indicateur de position (20). L'indicateur de position (20) est placé sur la tige (17). Grâce à l'indicateur de position (20), l'utilisateur peut déduire la position de la tige (17) dans le cylindre (16). Il pourra ainsi mettre la bielle supérieure (1) en traction lors du labour pour augmenter l'appui au sol de l'essieu arrière du tracteur et par conséquent lui donner une capacité de traction optimale. L'utilisateur peut régler la position de l'indicateur de position (20) en modifiant la distance entre les points inférieurs (6) et le sol au moyen du système d'attelage trois points (8). Lorsque la tige (17) est disposée à mi-course dans le cylindre (16), le débattement de la charrue par rapport au tracteur (4) est optimum lors de la circulation sur la route.

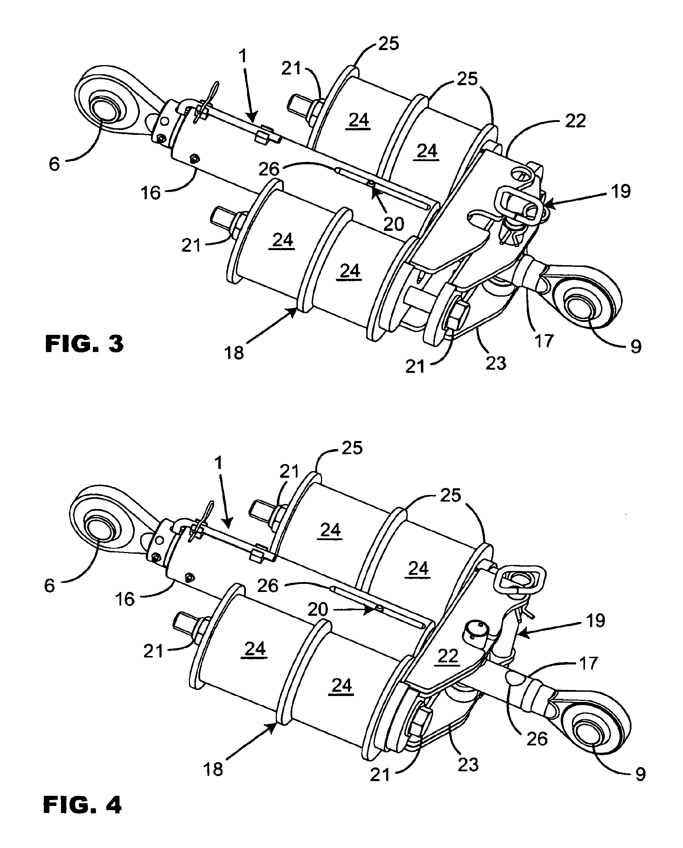

Les figures 3 et 4 représentent un exemple de réalisation de la bielle supérieure (1). La figure 3 illustre la bielle supérieure (1) configurée pour le travail et la figure 4 illustre la bielle supérieure (1) configurée pour le transport. Il s'agit d'une version mécanique de la bielle supérieure (1).

Sur la figure 3, la tige (17) est solidaire du cylindre (16) par l'intermédiaire du sélecteur (19). Le cylindre (16) porte le dispositif élastique (18) au moyen d'au moins un boulon (21). Le boulon (21) permet d'appliquer une précontrainte sur le dispositif élastique (18). Le boulon (21) assure la liaison du dispositif élastique ( 18) avec la bride (23) et le support (22). Le cylindre (16) comporte à cet effet un support (22) et une bride (23). La bride (23) présente une forme correspondante au support (22), cette forme permet une intégration de la bride (23) dans le support (22).

Dans l'exemple de réalisation, le sélecteur (19) est une broche et le dispositif élastique (18) comporte au moins un organe élastique (24). Le dispositif élastique (18) comporte deux groupes présentant au moins un organe élastique (24). Un groupe étant disposé à droite et l'autre à gauche du cylindre (16). Chaque groupe est composé de deux organes élastique (24). Ces deux organes élastiques (24) sont précontraints entre des entretoises (25) au moyen du boulon (21). Lorsque la bielle supérieure (1) est configurée pour le travail, le mouvement de translation de la tige (17) par rapport au cylindre (16) est supprimé. La tige (17) est pourvue d'un trou (26) à cet effet. La broche traverse alors la bride (23) et le trou (26) de la tige ( 17). Lors du soulèvement et/ou lors du retournement de la charrue, le dispositif élastique (18) a pour fonction d'absorber l'augmentation de longueur de la bielle supérieure ( 1) qui est soumise à des efforts. Les organes élastiques (24) se déforment pour absorber les efforts. Ainsi lorsque la charrue est soulevée en fin de champ, le dispositif élastique ( 18) permet de réduire les contraintes subies par la charrue. A la lumière de la figure 3, la tige (17) tire sur la bride (23) qui s'éloigne du support (22) et comprime les organes élastiques (24). Le dispositif élastique ( 18) amortit aussi le balourd de la charrue. D'une manière alternative, le dispositif élastique (18) pourrait aussi être composé d'au moins un bloc en élastomère, d'au moins un ressort, ou d'au moins une rondelle élastique.

Sur la figure 4, la tige (17) n'est plus solidaire du cylindre (16) via le sélecteur (19). Ainsi, la tige ( 17) est libre de se déplacer dans le cylindre (16). La bielle est configurée pour autoriser le mouvement de translation de la tige (17) par rapport au cylindre (16). Le sélecteur (19) est remisé sur le support (22). Avec la bielle supérieure (1) flottante, la rotation autour des deux points inférieurs (5) est libérée sans décrochage. Le passage de la position travail à la position transport est réalisé manuellement. L'utilisateur solidarise la tige (17) à la bride (23) par l'intermédiaire de la broche ou simplement, il remise la broche sur son support (22). Ainsi, le passage d'une configuration à l'autre et inversement, est réalisé par un changement de position du sélecteur (19). Le passage peut se faire rapidement et facilement pour un coût raisonnable et sans augmentation notable de poids.

Les figures 3 et 4 montrent un indicateur de position (20) réalisé par une goupille. La goupille traverse l'extrémité de la tige (17) qui est logée dans le cylindre (16). Le cylindre (16) comporte à cet effet un trou oblong (26) qui fait office de butée limitant le déplacement de la goupille.

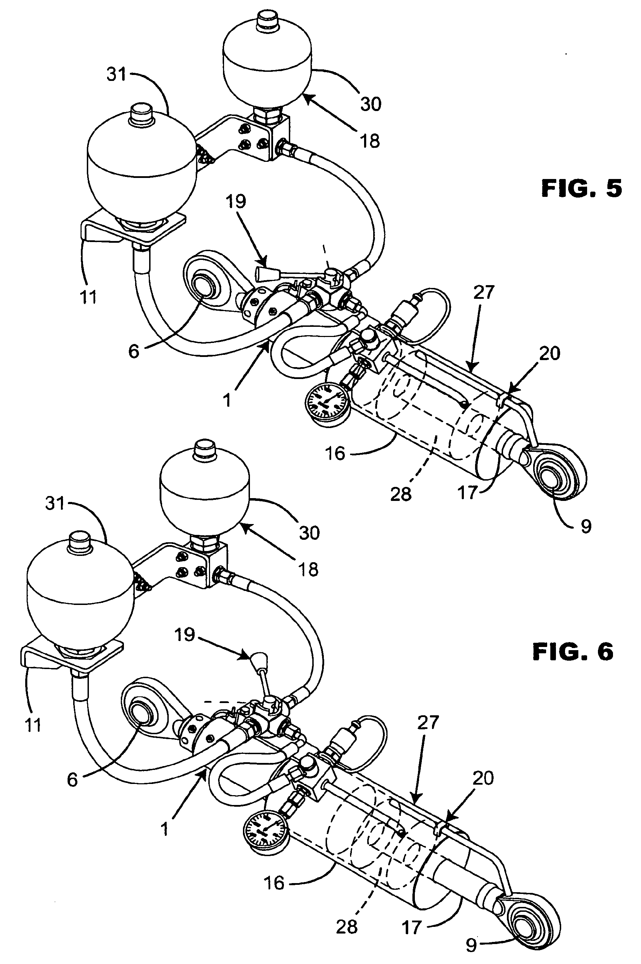

Les figures 5 et 6 représentent un deuxième exemple de réalisation de la bielle supérieure (1). La figure 5 illustre la bielle supérieure (1) configurée pour le travail et la figure 6 illustre la bielle supérieure (1) configurée pour le transport. Il s'agit d'une version hydraulique de la bielle supérieure (1). Sur ces figures, la bielle supérieure (1) est réalisée sous la forme d'un vérin (27) du type simple effet avec un cylindre (16) et une tige (17). Ce vérin (27) comporte une chambre annulaire (28) et une grande chambre. Le dispositif élastique (18) est composé d'au moins un accumulateur c'est-à-dire un réservoir de fluide sous pression. Le dispositif élastique ( 18) est relié à la chambre annulaire (28) et la grande chambre est à la pression atmosphérique. Un manomètre permet de contrôler la pression de la chambre annulaire (28).

Sur la figure 5, la bielle supérieure (1) est configurée pour le travail. Le sélecteur (19) relie la chambre annulaire (28) du vérin (27) à l'accumulateur (30). L'accumulateur (30) présente un petit volume et une pression élevée, ce qui permet un amortissement du déplacement de la tige (17) dans le cylindre (16), lors du soulèvement et/ou du retournement de la charrue. Ainsi sollicitée, la bielle supérieure (1) a tendance à s'allonger. La tige (17) tire sur le cylindre (16) ce qui chasse l'huile vers l'accumulateur (30) qui l'emmagasine. Le volume de fluide sous pression de la chambre annulaire (28) diminue. Après la sollicitation, ce fluide emmagasiné est alors restitué à la chambre annulaire (28). Les contraintes subies par la charrue sont alors amorties.

Sur la figure 6, la bielle supérieure (1) est configurée pour le transport. Le sélecteur (19) relie la chambre annulaire (28) du vérin (27) à un autre accumulateur (31) constituant une réserve d'huile. Cet autre accumulateur (31) présente, pour sa part, un grand volume et une pression faible permettant à la tige (17) de se déplacer quasiment librement par rapport au cylindre (16). Ce déplacement est facilité par la faible pression régnant dans la chambre annulaire (28). Le passage d'une configuration à l'autre, et vice et versa, est commandé par le sélecteur (19). Pour cela, les deux accumulateurs (30, 31) sont montés en parallèle. Les deux accumulateurs (30, 31) sont tous deux fixés sur l'avant-train (11) de la charrue. Le sélecteur ( 19) présente au moins deux positions permettant de relier l'un ou l'autre des accumulateurs (30, 31) à la chambre annulaire (28). Cette action est simple et ne nécessite pas le décrochage de la bielle supérieure (1). Le sélecteur (19) est réalisé sous forme d'une vanne de sélection actionnée manuellement mais elle peut également être actionnée depuis la cabine du tracteur (4). Le sélecteur (19) peut aussi être réalisé par un distributeur via une commande depuis la cabine du tracteur (4). Dans les figures 5 et 6, l'indicateur de position (20) est fixé sur l'extrémité de la tige (17) au voisinage du point d'appui supérieur (9) au niveau de la liaison rotule. Il est réalisé par une tringle qui se déplace par rapport à un repère fixé sur le cylindre (16) du vérin (27).

Dans un autre exemple de réalisation non représenté, la bielle supérieure selon l'invention est également un vérin hydraulique mais du type à double effet. La bielle supérieure (1) est identique au deuxième exemple de réalisation (figures 5 et 6). Le vérin (27) présente ainsi un cylindre (16), une tige (17), une chambre annulaire (28) et une grande chambre. Les deux chambres sont alimentées alternativement par le réservoir d'huile du tracteur par l'intermédiaire d'un distributeur quatre orifices et quatre positions. La chambre annulaire (28) du vérin (27) est reliée à un dispositif élastique (18) tel qu'un accumulateur (30). Ceci permet la suspension de la bielle supérieure (1) lors du travail. Dans cet exemple de réalisation, le distributeur quatre orifices et quatre positions fait office de sélecteur (19). Grâce à la quatrième position supplémentaire du distributeur, la bielle supérieure (1) peut être configurée pour le transport c'est-à-dire que le déplacement de la tige ( 17) dans le cylindre (16) est libre.

Cette quatrième position supplémentaire permet à la chambre annulaire (28) de communiquer avec la grande chambre, et inversement par l'intermédiaire du réservoir d'huile du tracteur. Dans cette position, il n'y a plus de pression dans les lignes d'alimentation du vérin (27). Ainsi, la charrue peut suivre aisément les dénivelés du terrain grâce à la position flottante de la bielle supérieure (1) car la tige (17) est libre de se déplacer dans le cylindre (16) du vérin (27). La configuration flottante pour le transport de la bielle supérieure (1) ou la configuration suspendue pour le travail est sélectionnée via le distributeur. Le distributeur est piloté depuis la cabine du tracteur.

D'une manière alternative, non représentée, l'utilisation d'un vérin du type double effet à la place du vérin simple effet permet de remplacer le réglage mécanique via le tube intermédiaire de la bielle supérieure (1).

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Bielle supérieure (1) pour accrocher une machine agricole (2) munie d'un dispositif d'accouplement (3) en trois points (5, 6) à un tracteur (4) présentant un attelage trois points (8), le point supérieur d'attelage (6) du dispositif d'accouplement (3) est relié au point d'appui supérieur (9) du tracteur (4) au moyen de ladite bielle supérieure (1), ladite machine agricole (2) est portée via l'attelage trois points (8) durant le travail et est semi-portée lors du transport, ***caractérisée en ce* qu'**elle comporte un cylindre (16), une tige (17), un dispositif élastique (18) et un sélecteur (19) permettant le passage de la position de travail à la position de transport, et inversement.

2. Bielle supérieure selon la revendication 1, ***caractérisée en ce* que** ledit sélecteur (19) permet à la bielle supérieure (1) d'être agencée dans au moins deux configurations.

3. Bielle supérieure selon la revendication 2, ***caractérisée en ce* que** dans une configuration, le déplacement de la tige (17) par rapport audit cylindre (16) est limité permettant un amortissement et que dans l'autre configuration, le déplacement de ladite tige (17) dans ledit cylindre (16) est autorisé.

4. Bielle supérieure selon l'une quelconque des revendications 1 à 3, ***caractérisée en ce* que** ledit sélecteur (19) est une broche ou une vanne.

5. Bielle supérieure selon l'une quelconque des revendications 1 à 4, ***caractérisée en ce* qu'**elle est pourvue d'un indicateur de position (20).

6. Bielle supérieure selon l'une quelconque des revendications 1 à 5, ***caractérisée en ce* que** le dispositif élastique (18) est réalisé par au moins un organe élastique, au moins un bloc en élastomère, au moins un ressort, au moins une rondelle élastique ou au moins un accumulateur (30).

7. Bielle supérieure selon l'une quelconque des revendications 1 à 6, ***caractérisée en ce* que** ledit dispositif élastique (18) est lié audit cylindre (16) par l'intermédiaire d'au moins un boulon (21) et d'une bride (23).

8. Bielle supérieure selon la revendication 7, ***caractérisée en ce* que** ladite tige (17) est liée à ladite bride (23) par l'intermédiaire dudit sélecteur (19) dans une des positions.

9. Bielle supérieure selon l'une quelconque des revendications 1 à 6, ***caractérisée en ce* qu'**elle est réalisée par un vérin (27) dont la chambre annulaire (28) est relié à au moins un accumulateur (30).

10. Machine agricole comportant un dispositif selon l'une quelconque des revendications 1 à 9, ***caractérisée en ce* que** ladite machine agricole (2) est une charrue portée équipée d'une roue (10) reposant au sol pour le transport.

## Claims

1. Upper link (1) for hitching an agricultural machine (2) provided with a three-point (5, 6) coupling device (3) to a tractor (4) having a three-point linkage (8), the upper coupling point (6) of the coupling device (3) is connected to the upper bearing point (9) of the tractor (4) by means of the said upper link (1), the said agricultural machine (2) is mounted via the three-point linkage (8) during work and is semi-mounted during transport, ***characterized in* that** it comprises a cylinder (16), a rod (17), an elastic device (18) and a selector (19) allowing the passage from the work position to the transport position, and vice versa.

2. Upper link according to claim 1, ***characterized in* that** the said selector (19) allows the upper link (1) to be arranged in at least two configurations.

3. Upper link according to claim 2, ***characterized in* that** in one configuration, the displacement of the rod (17) with respect to the said cylinder (16) is limited, allowing an absorption, and that in the other configuration, the displacement of the said rod (17) in the said cylinder (16) is allowed.

4. Upper link according to any one of claims 1 to 3, ***characterized in* that** the said selector (19) is a broach or a valve.

5. Upper link according to any one of claims 1 to 4, ***characterized in* that** it is provided with a position indicator (20).

6. Upper link according to any one of claims 1 to 5, ***characterized in* that** the elastic device (18) is achieved by at least one elastic element, at least one elastomer block, at least one spring, at least one elastic washer or at least one accumulator (30).

7. Upper link according to any one of claims 1 to 6, ***characterized in* that** the said elastic device (18) is connected to the said cylinder (16) via at least one bolt (21) and by a flange (23).

8. Upper link according to claim 7, ***characterized in* that** the said rod (17) is connected to the said flange (23) via the said selector (19) in one of the positions.

9. Upper link according to any one of claims 1 to 6, ***characterized in* that** it is achieved by a jack (27), the annular chamber (28) of which is connected to at least one accumulator (30).

10. Agricultural machine comprising a device according to any one of claims 1 to 9, ***characterized in* that** the said agricultural machine (2) is a mounted plough equipped with a wheel (10) resting on the ground for transport.

## Patentansprüche

1. Oberer Lenker (1) zur Kupplung einer landwirtschaftlichen Maschine (2), die mit einer Vorrichtung (3) zur Kupplung an drei Punkten (5, 6) an einen Traktor (4), der eine Dreipunktkupplung (8) aufweist, versehen ist, wobei der obere Kupplungspunkt (6) der Kupplungsvorrichtung (3) mit dem oberen Abstützungspunkt (9) des Traktors (4) mittels des oberen Lenkers (1) verbunden ist, wobei die landwirtschaftliche Maschine (2) über die Dreipunktkupplung (8) während der Arbeit angebaut und beim Transport aufgesattelt wird, ***dadurch gekennzeichnet,* dass** er ein Gehäuse (16), eine Stange (17), eine elastische Vorrichtung (18) und eine Auswahlvorrichtung (19) umfasst, die den Übergang von der Arbeitsposition in die Transportposition und umgekehrt ermöglichen.

2. Oberer Lenker nach Anspruch 1, ***dadurch gekennzeichnet,* dass** es die Auswahlvorrichtung (19) dem oberen Lenker (1) ermöglicht, in mindestens zwei Ausführungen angeordnet zu werden.

3. Oberer Lenker nach Anspruch 2, ***dadurch gekennzeichnet,* dass** in einer Ausführung die Bewegung der Stange (17) in Bezug zum Gehäuse (16) begrenzt ist, wodurch eine Dämpfung möglich ist, und dass in der anderen Ausführung die Bewegung der Stange (17) in dem Gehäuse (16) gestattet ist.

4. Oberer Lenker nach irgend einem der Ansprüche 1 bis 3, ***dadurch gekennzeichnet,* dass** die Auswahlvorrichtung (19) eine Spindel oder ein Ventil ist.

5. Oberer Lenker nach irgend einem der Ansprüche 1 bis 4, ***dadurch gekennzeichnet,* dass** er mit einem Positionsanzeiger (20) versehen ist.

6. Oberer Lenker nach irgend einem der Ansprüche 1 bis 5, ***dadurch gekennzeichnet,* dass** die elastische Vorrichtung (18) von mindestens einem elastischen Element, mindestens einem Elastomerblock, mindestens einer Feder, mindestens einer elastischen Scheibe oder mindestens einem Speicher (30) gebildet ist.

7. Oberer Lenker nach irgend einem der Ansprüche 1 bis 6, ***dadurch gekennzeichnet,* dass** die elastische Vorrichtung (18) mit dem Gehäuse (16) über mindestens einen Bolzen (21) und einen Flansch (23) verbunden ist.

8. Oberer Lenker nach Anspruch 7, ***dadurch gekennzeichnet,* dass** die Stange (17) mit dem Flansch (23) über die Auswahlvorrichtung (19) in einer der Positionen verbunden ist.

9. Oberer Lenker nach irgend einem der Ansprüche 1 bis 6, ***dadurch gekennzeichnet,* dass** er durch einen Zylinder (27) verwirklicht ist, dessen ringförmige Kammer (28) mit mindestens einem Speicher (30) verbunden ist.

10. Landwirtschaftliche Maschine mit einer Vorrichtung nach irgend einem der Ansprüche 1 bis 9, ***dadurch gekennzeichnet,* dass** die landwirtschaftliche Maschine (2) ein Anbaupflug ist, der mit einem Rad (10) versehen ist, das für den Transport am Boden aufliegt.
